# FASCICULE DE BREVET EUROPEEN

(11) **EP 3 277 525 B1**
(45) Date de publication et mention de la délivrance du brevet: **29.04.2020**
(21) Numéro de dépôt: 16714504.4
(22) Date de dépôt: 25.03.2016
(51) Int. Cl.: B60C 11/24, B60C 11/13

(54) **PNEUMATIQUE A BANDE DE ROULEMENT POURVUE DE TEXTURES**
REIFEN MIT TEXTURIERTER LAUFFLÄCHE
TYRE COMPRISING A TEXTURED TREAD

(30) Priorité: 30.03.2015 FR 1500628
(43) Date de publication de la demande: 07.02.2018
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); EMORINE, Hélène, 63040 Clermont-Ferrand Cedex 9 (FR); LARREGAIN, Arnaud, 63040 Clermont-Ferrand Cedex 9 (FR); LEVY, Nicolas, 63040 Clermont-Ferrand Cedex 9 (FR)
(74) Mandataire: Demaure, Pierre-Yves
(86) Numéro de dépôt international: PCT/FR2016/050683
(87) Numéro de publication internationale: WO 2016/156718

(56) Documents cités:
- EP-A1- 1 568 514
- JP-A- H0 699 705
- JP-A- 2004 196 145

## Description

### DOMAINE TECHNIQUE DE L'INVENTION

La présente invention concerne un pneumatique dont le sommet comporte une bande de roulement pourvue de rainures à zones texturées.

### ETAT DE LA TECHNIQUE ANTERIEURE

Afin de préserver le niveau de sécurité d'un véhicule, il est opportun de contrôler le niveau d'usure des pneumatiques de façon régulière, et de préférence avant chaque trajet long. Pour cela, l'automobiliste observe la surface de la bande de roulement des pneumatiques et mesure la hauteur des sculptures. Cette mesure est facilitée par un élément présent sur tout type de pneumatique : le témoin d'usure. Le témoin d'usure permet d'évaluer sur une base d'une référence fiable, l'état d'usure des pneumatiques. Ce témoin est typiquement disposé dans les rainures des pneumatiques. Ainsi lorsque les sculptures de la bande de roulement se situent à la même hauteur que les témoins d'usure, (soit par exemple, en Europe, au minimum à 1,6 millimètres de hauteur par rapport au fond de sillon), il convient de remplacer le ou les pneumatiques.

Le témoin d'usure est installé en fond de sillons et se présente généralement sous forme rectangulaire. Il doit être visible non seulement pour l'utilisateur, mais également pour les tiers, par exemple dans le but de permettre de contrôler la conformité des témoins d'usure à la législation. Il est donc important de disposer de repères visuels efficaces et fiables pour permettre de localiser les témoins d'usure de façon simple et rapide. Dans certains cas, les témoins d'usure de certains pneumatiques de véhicules de tourisme, en particulier les modèles dont le châssis est surbaissé, sont moins visibles dans la mesure où des éléments de carrosserie recouvrent la partie haute des pneumatiques. Dans cette situation, le témoin d'usure devient moins visible. L'utilisateur peut alors identifier l'emplacement du témoin d'usure en se référant à un repère situé en zone d'épaule. Un tel repère peut être constitué par le symbole bien connu « TWI » (signifiant en anglais « Tire Wear Indicator », ou en français : indicateur de témoin d'usure), ou tout autre symbole aisément reconnaissable par les utilisateurs.

Dans d'autres cas, les rainures de la bande de roulement sont entièrement recouvertes de textures absorbant la lumière, rendant la localisation du témoin d'usure difficile, voire parfois très ardue. Les documents JPH0699705, EP1568514, JP2004196145 divulguent des rainures comportant une pluralité d'éléments en protubérance.

**Par** exemple, la demande de brevet US6866076 décrit un pneumatique prévu pour réduire la résistance à l'écoulement d'un fluide dans les sillons. Le pneumatique comporte à cette fin des textures en fond de sillons. Les sillons du pneumatique sont recouverts de petites rainures ou petites nervures ayant une profondeur fixée dans une plage de 0,01 à 0,5 millimètres. Ainsi, la résistance à l'écoulement de l'eau dans le sillon est réduite. Grâce à ce type d'agencement, il est possible d'améliorer les performances du pneumatique, par exemple dans un milieu humide. Cependant, avec un tel agencement, le témoin d'usure, disposé parmi les rainures, est peu visible. Par ailleurs, la présence des rainures à proximité des témoins d'usure peut rendre délicate les opérations de contrôle de la hauteur des témoins d'usure. En effet, les rainures constituent des obstacles pouvant nuire au bon positionnement d'un outil de mesure tel qu'une réglette, un micromètre, ou un pied à coulisse, pouvant causer des mesures inexactes.

Pour pallier ces différents inconvénients, l'invention prévoit différents moyens techniques.

### EXPOSE DE L'INVENTION

Tout d'abord, un premier objet de l'invention consiste à prévoir un pneumatique agencé pour faciliter l'identification ou la localisation des témoins d'usure de la bande de roulement.

Encore un objet de l'invention consiste à faciliter la vérification de la conformité des témoins d'usure aux exigences légales.

Enfin, un autre objet de l'invention consiste à permettre de mesurer la hauteur des témoins d'usure positionnés dans un secteur texturé.

Pour ce faire, l'invention prévoit un pneumatique comprenant une bande de roulement, le pneumatique comprenant au moins une rainure, au moins un témoin d'usure disposé dans la rainure, le témoin d'usure comprenant une face de contact destinée à entrer en contact avec une chaussée lorsque le pneumatique atteint un niveau d'usure limite, la rainure comprenant une texture venue de matière avec un fond de cette rainure, ladite texture entourant le témoin d'usure et faisant contraste avec la face de contact du témoin d'usure. Le témoin d'usure comprend au moins une face latérale reliant la face de contact du témoin d'usure audit fond. La rainure comporte une zone dépourvue de texture, disposée entre une zone pourvue de texture et une face latérale du témoin d'usure, ladite zone dépourvue de texture comportant une longueur comprise entre 3 et 10 mm.

Ainsi les surfaces texturées des rainures absorbent la lumière. A l'inverse, les surfaces plus lisses des témoins d'usure permettent une meilleure réflexion de la lumière. Cela crée de fait un contraste entre les deux surfaces et rend d'avantage visible le ou les témoins d'usure. L'utilisateur peut ainsi identifier ou localiser les témoins d'usure de ses pneumatiques avec une plus grande facilité, rendant le contrôle d'usure des pneumatiques moins fastidieux.

De manière avantageuse, la texture présente une luminosité dite première luminosité (L*1), la face de contact du témoin d'usure présente une luminosité dite seconde luminosité (L*2), la différence de luminosité entre la première et la seconde luminosité étant d'au moins 5 unités de luminosité (sur une échelle variant de 0 à 100). Une telle différence de luminosité permet de créer un effet de contraste facilement repérable pour un utilisateur. Cet effet de contraste peut avantageusement servir à localiser un point spécifique tel qu'un témoin d'usure, classiquement difficilement repérable sur une bande de roulement sans un effet de contraste.

La première luminosité (L*1) est avantageusement comprise entre 5 et 18 unités, et préférentiellement entre 8 et 16 unités. Les valeurs tendent vers le noir, de façon à bien absorber la lumière incidente.

La luminosité de la face de contact (ou seconde luminosité) est comprise entre 20 et 35 unités. Les valeurs tendent vers le blanc, de façon à bien réfléchir la lumière incidente.

Une telle zone sert avantageusement de zone de mesure, facilitant le contrôle de conformité de la hauteur H du témoin d'usure, par exemple lors d'une étape de contrôle en sortie de moule. L'aspect non texturé de la zone de mesure permet de contrôler précisément et de manière certaine la hauteur H du témoin d'usure.

En variante, la texture est en creux par rapport au fond de la rainure. Une telle disposition en creux réduit le risque de perturber le flux d'écoulement d'eau et ne perturbe pas la mesure de la hauteur H du témoin d'usure.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « texture », on entend un agencement organisé d'une pluralité d'éléments, tout ou partie des éléments de l'agencement étant la répétition d'un même élément de base, par exemple, un brin ou une lamelle.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

Par « luminosité » ou « luminance », on entend le paramètre qui caractérise une surface à réfléchir plus ou moins la lumière. La luminosité est exprimée selon une échelle allant de 0 à 100 selon le modèle colorimétrique L*a*b* établit par la CIE (Commission Internationale de l'Eclairage) en 1976. La valeur 100 représente le blanc ou la réflexion totale ; la valeur 0, le noir ou l'absorption totale. Dans ce modèle colorimétrique a* et b* sont des coordonnées de chromaticité. Le modèle colorimétrique L*a*b* définit également un diagramme de chromaticité. Dans ce diagramme, a* et b* indiquent la direction des couleurs : +a* va vers le rouge, -a* vers le vert, +b* vers le jaune, et -b* vers le bleu. Le centre du diagramme est achromatique. Au fur et à mesure que les valeurs a* et b* augmentent, et que l'on s'éloigne donc du centre du diagramme, la saturation augmente.

### DESCRIPTION DES FIGURES

Tous les détails de réalisation sont donnés dans la description qui suit, complétée par les figures 1 à 11, présentées uniquement à des fins d'exemples non limitatifs, et dans lesquelles :
- la figure 1 est une vue partielle d'une bande de roulement d'un pneumatique selon l'invention ;
- la figure 2 est une vue en coupe d'un exemple de témoin d'usure selon l'art antérieur ;
- la figure 3 est une vue en coupe d'une variante de réalisation du témoin d'usure de la figure 2 selon l'art antérieur ;
- les figures 4 et 5 sont des vues en coupe de deux exemples de témoins d'usure non texturés entourés de zones de mesure également non texturées, insérés au sein d'une rainure texturée ;
- la figure 6 représente une partie de la texture de la rainure selon un premier exemple de réalisation selon lequel la texture présente des éléments en protubérance en forme de brins ;
- la figure 7 représente une partie de la texture de la rainure selon un second exemple de réalisation dans lequel la texture présente des éléments en protubérance en forme de lamelles ;
- la figure 8 représente une partie de la texture de la rainure, selon un troisième exemple de réalisation dans lequel la texture présente des éléments en protubérance en forme de parallélépipèdes ;
- la figure 9 représente une partie de la texture de la rainure, selon un quatrième exemple de réalisation dans lequel la texture présente des éléments en protubérance dont les formes et les distances entre éléments en protubérance sont variables ;
- la figure 10 représente une partie de la texture de la rainure, selon un cinquième exemple de réalisation dans lequel la texture présente des éléments en creux, coniques dans cet exemple ;
- la figure 11 représente une vue agrandie d'une cavité d'un élément en creux de la texture de la figure 10.

### DESCRIPTION DETAILLEE DE L'INVENTION

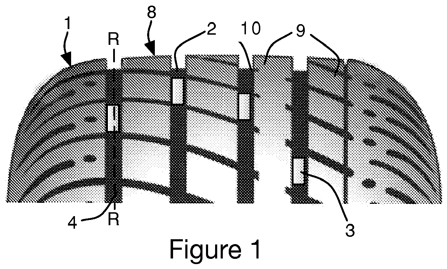

La figure 1 est une représentation schématique d'une portion d'une bande de roulement 8 d'un pneumatique 1. La bande de roulement 8 prévoit une surface de contact avec le sol constituée de sommets 9 de sculptures. Les fonds 10 de sculptures du pneumatique 1 forment des rainures 2, ou sillons. Les rainures 2 servent de logement afin de positionner les témoins d'usure 3. Les rainures 2 peuvent également être agencées de différentes manières afin de répondre à des fonctions spécifiques. Dans l'exemple illustré, les rainures 2 sont circonférentielles et pourvues de textures 4 en fond 10 de rainures. Un tel revêtement présente de nombreux avantages fonctionnels et visuels. Cependant, il est susceptible d'affecter la visibilité des témoins d'usure 3. Ainsi, selon l'invention, et tel qu'illustré, les témoins d'usure 3, en particulier les faces de contact 7 des témoins d'usure, sont avantageusement dépourvus de textures, et présentent une surface produisant un contraste de luminosité avec la surface adjacente des sillons texturés. L'effet de contraste entre le fond des sillons et les témoins d'usure 3 permet de rendre ces derniers bien visibles, facilitant ainsi leur localisation. Une telle caractéristique est particulièrement avantageuse lorsque la bande de roulement 8 se trouve dans un contexte où la visibilité est restreinte.

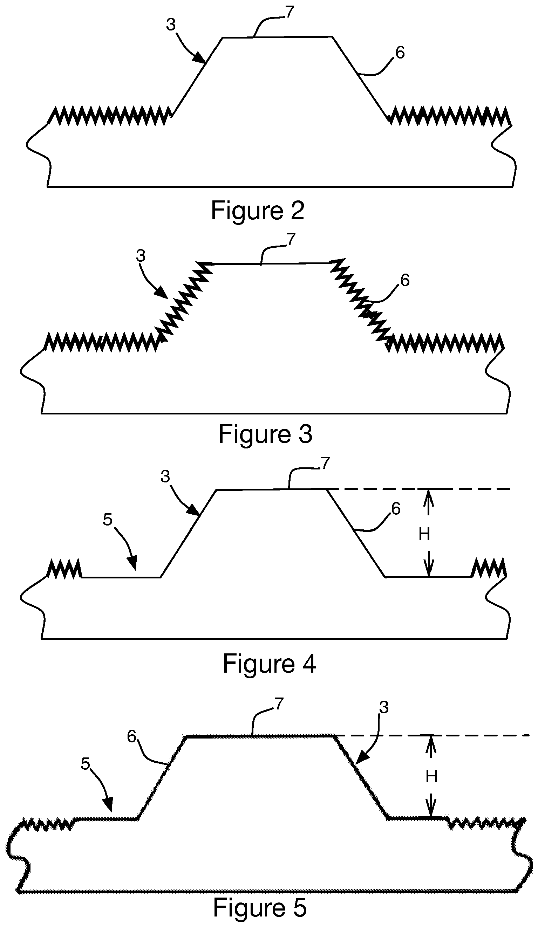

Tel qu'illustré à la figure 2, le témoin d'usure 3 non texturé est agencé dans une rainure 2 pourvue d'une texture 4, conformément à l'art antérieur. L'absence de texture sur le témoin d'usure 3 permet de créer un contraste accentué par rapport à la rainure 2 texturée.

Un témoin d'usure 3 peut comporter des surfaces texturées, comme par exemple une face latérale 6. La figure 3 illustre un tel exemple de réalisation conformément à l'art antérieur. Il est toutefois préférable que la face de contact 7 (ou partie fonctionnelle) du témoin d'usure soit non texturée de sorte que le contraste avec la texture de la rainure 4 soit accentué. L'intégration de témoins d'usure 3 non texturés au sein de rainures texturées 4 a pour effet d'accentuer la visibilité des témoins d'usure 3 par des effets de contrastes, notamment de luminosité. Les témoins d'usure 3 sont ainsi mieux visibles.

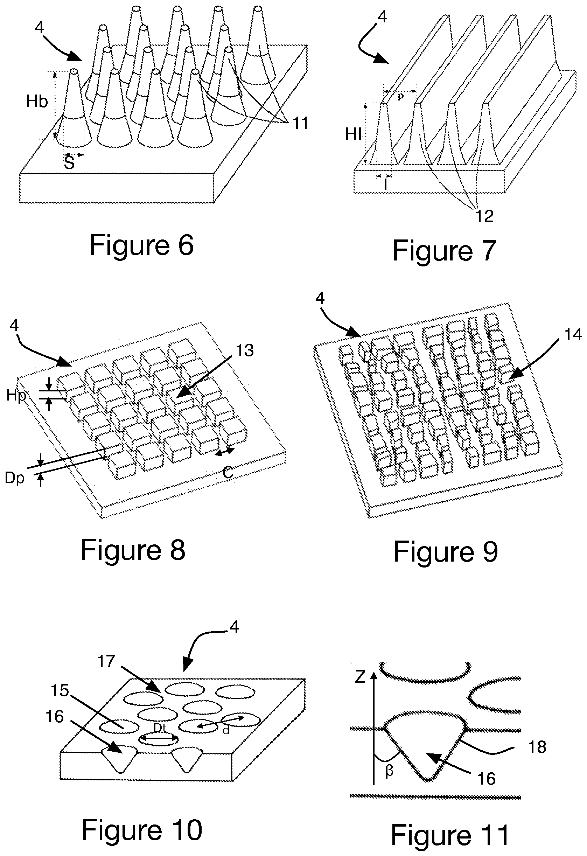

L'effet de contraste préalablement évoqué provient du fait que la luminosité des zones pourvues de textures est inférieure à celle des zones dépourvues de textures. Divers arrangements ou configurations de textures 4 permettent de produire un tel effet, tel que décrit ci-après, en relation avec les figures 6 à 11.

L'appareil de mesure de la luminosité approprié est un spectro-colorimètre CM 700D de la marque KONICA-MINOLTA, (marque déposée). Cet appareil est adapté pour mesurer :
- la luminosité L*1, L*2 des zones de la rainure (zones recouvertes par la texture, zones non recouvertes par la texture) ;
- une composante a* qui définit une première nuance de couleur entre le rouge et le vert ;
- une composante b* qui définit une deuxième nuance de couleur entre le jaune et le bleu.
On positionne ledit appareil sur la partie du pneumatique que l'on veut mesurer et ledit appareil donne les valeurs des trois paramètres L*, a*, b* relatifs à la texture. Ces mesures sont effectuées avec le mode « SCI » (Mode de réflexion spéculaire incluse) paramétré à un angle de 10° et un réglage de la lumière de type D65 (réglage défini selon la Commission Internationale de l'Eclairage, CIE). Grâce à cet appareil, on quantifie la luminosité des textures de la rainure 4 qui est ensuite comparée à la luminosité des parties non texturées du témoin d'usure.

L'agencement favorisant la visibilité des témoins d'usure 3 en fond de rainure 4 préalablement décrit peut être avantageusement utilisé pour tout type de pneumatique 1.

Les figures 4 et 5 illustrent des représentations schématiques en coupe d'un mode de réalisation des témoins d'usure 3 selon l'invention. Des zones 5 non texturées sont dégagées au voisinage immédiat du témoin d'usure 3 afin de permettre de mesurer très précisément la hauteur H de celui-ci de manière certaine et répétitive lors d'une étape de contrôle du témoin d'usure pendant le processus de fabrication du pneumatique. Dans l'exemple de réalisation de la figure 4, la base des textures dans le fond de la rainure 10 est située à la même position radiale que la zone de mesure 5 jouxtant le témoin d'usure 3. Dans l'exemple de la figure 5, les sommets des textures de la rainure sont situés à la même position radiale que la zone de mesure 5 jouxtant le témoin d'usure 3. Dans ces deux exemples de réalisation, la zone de mesure est sensiblement plane et dépourvue de textures.

Les figures 6 à 11 illustrent des exemples de textures 4 pouvant être disposées sur la rainure 2 selon l'invention.

La figure 6 illustre un mode de réalisation dans lequel la texture comporte une pluralité de brins 11. Les brins 11 sont répartis dans la texture selon une densité au moins égale à un brin par mm², chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins ont une forme globalement conique avec une section diminuant dans la hauteur Hb de ces brins.

La figure 7 illustre un mode de réalisation dans lequel la texture comporte une pluralité de lames 12 parallèles entre elles, le pas des lames 12 dans la texture étant au plus égal à 0,5 mm, chaque lame 12 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm.

Dans une autre variante de réalisation, la texture comporte une combinaison de brins 11 et/ou et de lames 12.

L'invention n'est pas limitée aux exemples décrits et représentés et diverses modifications peuvent y être apportées sans sortir de son cadre. Ainsi, selon une autre variante de réalisation non limitative, les lames 12 de la figure 7 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Dans l'exemple de la figure 8, les textures ont une section parallélépipédique 13 de côté C compris entre 0,05 mm et 0,5 mm, de hauteur Hp comprise entre 0,05 mm et 0,5 mm, la distance Dp entre deux cavités adjacentes dans la texture étant comprise entre 0,05 mm et 0.5 mm. En variante la section des textures peut être circulaire, polygonale (par exemple hexagonale). Avec les structures carrées ou polygonales, il est possible d'organiser plus facilement les éléments les uns par rapport aux autres de sorte à limiter la surface des zones intermédiaires entre les éléments.

Dans la variante de la figure 9, les éléments 14 présentent des formes et des distances variables entre eux. Cette variante permet de rendre moins visible les détails de la texture 4.

La figure 10 illustre une texture selon une autre variante de réalisation non limitative. Dans cette variante, la texture est formée par une pluralité de cavités 16. Les cavités 16 sont ici en forme de cônes qui s'étendent dans la profondeur de la surface et débouchent sur cette surface en formant des ouvertures 15 circulaires. Les cavités 16 ont ainsi une section qui diminue dans la profondeur. On note que dans cette variante, les ouvertures 15 des cavités 16 ne se touchent pas. Les ouvertures 15 sont séparées par des zones intermédiaires 17. En outre, les ouvertures 15 sont régulièrement réparties de sorte que la distance d entre chaque ouverture 15 est globalement similaire.

La figure 11 est une vue agrandie de la texture de la figure 10. Tout ou partie des cavités a ici au moins une paroi 18 qui, selon une vue en coupe, forme un angle β compris entre 10° et 60° par rapport à une direction Z perpendiculaire à la texture.

Les Figures et leurs descriptions faites ci-dessus illustrent l'invention plutôt qu'elles ne la limitent.

Les signes de références dans les revendications n'ont aucun caractère limitatif. Les verbes "comprendre" et "comporter" n'excluent pas la présence d'autres éléments que ceux listés dans les revendications.

### Numéros de référence employés sur les figures

- 1: Pneumatique
- 2: Rainure
- 3: Témoin d'usure
- 4: Texture
- 5: Zone dépourvue de texture
- 6: Face du témoin d'usure
- 7: Face de contact du témoin d'usure
- 8: Bande de roulement
- 9: Sommet de sculpture de la bande de roulement
- 10: Fond de rainure
- 11: Brins
- 12: Lames
- 13: Section parallélépipédique
- 14: Eléments en protubérance
- 15: Ouvertures
- 16: Cavités
- 17: Zones intermédiaires
- 18: Paroi de cavité

## Revendications

1. Pneumatique (1) comprenant une bande de roulement (8), le pneumatique comprenant au moins une rainure (2), au moins un témoin d'usure (3) disposé dans la rainure (2), le témoin d'usure comprenant une face de contact (7) destinée à entrer en contact avec une chaussée lorsque le pneumatique atteint un niveau d'usure limite, la rainure (2) comprenant une texture (4) venue de matière avec un fond (10) de cette rainure (2), ladite texture (4) étant un agencement organisé d'une pluralité d'éléments, tout ou partie des éléments de l'agencement étant la répétition d'un même élément de base, tel qu'un brin ou une lamelle, ladite texture (4) entourant le témoin d'usure (3) et faisant contraste avec la face de contact (7) du témoin d'usure, le témoin d'usure (3) comprenant au moins une face latérale (6) reliant la face de contact (7) du témoin d'usure audit fond (10), **caractérisé en ce que** la rainure (2) comporte une zone (5) dépourvue de texture, disposée entre une zone pourvue de texture (4) et la face latérale (6) du témoin d'usure, ladite zone (5) dépourvue de texture comportant une longueur comprise entre 3 et 10 mm.

2. Pneumatique selon la revendication 1, dans lequel la texture (4) présente une luminosité dite première luminosité (L*1), la face de contact (7) du témoin d'usure présente une luminosité dite seconde luminosité (L*2), **caractérisé en ce que** la différence de luminosité entre la première et la seconde luminosité est d'au moins 5 unités de luminosité, ladite luminosité étant le paramètre qui caractérise une surface à réfléchir plus ou moins la lumière, ladite luminosité étant exprimée selon une échelle allant de 0 à 100 selon le modèle colorimétrique L*a*b établit par la Commission Internationale de l'Eclairage en 1976.

3. Pneumatique (1) selon la revendication 2, dans lequel la première luminosité (L*1) est comprise entre 5 et 18 unités, préférentiellement entre 8 et 16 unités.

4. Pneumatique (1) selon l'une des revendications 2 à 3, dans lequel la luminosité de la face de contact (7) est comprise entre 20 et 35 unités.

5. Pneumatique (1) selon l'une des revendications 1 à 4, ladite face latérale (6) étant pourvue de ladite texture (4).

6. Pneumatique (1) selon l'une quelconque des revendications 1 à 5, dans lequel la texture (4) comporte une pluralité de brins (11), lesdits brins (11) étant répartis dans la texture selon une densité au moins égale à un brin par mm², chaque brin ayant une section moyenne S comprise entre 0,0005 mm² et 1 mm².

7. Pneumatique (1) selon l'une quelconque des revendications 1 à 6, dans lequel la texture (4) comporte une pluralité de lames (12) parallèles entre elles, le pas des lames (12) dans la texture (4) étant au plus égal à 0,5 mm, chaque lame 12 ayant une largeur moyenne comprise entre 0,02 mm et 0,5 mm.

8. Pneumatique (1) selon l'une quelconque des revendications 1 à 7, dans lequel les textures ont une section parallélépipédique (13) de côté C compris entre 0,05 mm et 0,5 mm, de hauteur Hp comprise entre 0,05 mm et 0,5 mm.

9. Pneumatique (1) selon l'une quelconque des revendications 1 à 8, dans lequel la texture (4) est formée par une pluralité de cavités (16), lesdites cavités (16) étant en forme de cônes, lesdites cavités s'étendant dans la profondeur de la surface et débouchant sur cette surface en formant des ouvertures (15) circulaires.

## Patentansprüche

1. Reifen (1), der einen Laufstreifen (8) umfasst, wobei der Reifen mindestens eine Rille (2) umfasst, mindestens eine Verschleißanzeige (3), die in der Rille (2) angeordnet ist, wobei die Verschleißanzeige eine Kontaktfläche (7) umfasst, die dazu bestimmt ist, mit einer Fahrbahn in Kontakt zu gelangen, wenn der Reifen einen Grenzverschleißgrad erreicht, wobei die Rille (2) eine mit einem Boden (10) dieser Rille (2) einstückige Textur (4) umfasst, wobei die Textur (4) eine organisierte Anordnung aus einer Vielzahl von Elementen ist, wobei alle oder ein Teil der Elemente der Anordnung die Wiederholung desselben Grundelements wie beispielsweise einer Faser oder einer Lamelle sind, wobei die Textur (4) die Verschleißanzeige (3) umgibt und mit der Kontaktfläche (7) der Verschleißanzeige kontrastiert, wobei die Verschleißanzeige (3) mindestens eine Seitenfläche (6) umfasst, welche die Kontaktfläche (7) der Verschleißanzeige mit dem Boden (10) verbindet, **dadurch gekennzeichnet, dass** die Rille (2) einen Bereich (5) ohne Textur beinhaltet, der zwischen einem Bereich mit Textur (4) und der Seitenfläche (6) der Verschleißanzeige angeordnet ist, wobei der Bereich (5) ohne Textur eine Länge zwischen 3 und 10 mm beinhaltet.

2. Reifen nach Anspruch 1, wobei die Textur (4) eine Helligkeit, erste Helligkeit (L*1) genannt, aufweist, wobei die Kontaktfläche (7) der Verschleißanzeige eine Helligkeit, zweite Helligkeit (L*2) genannt, aufweist, **dadurch gekennzeichnet, dass** der Helligkeitsunterschied zwischen der ersten und der zweiten Helligkeit mindestens 5 Helligkeitseinheiten beträgt, wobei die Helligkeit der eine Oberfläche charakterisierende Parameter ist, das Licht mehr oder weniger stark zu reflektieren, wobei die Helligkeit auf einer Skala von 0 bis 100 nach dem von der Internationalen Beleuchtungskommission im Jahr 1976 angenommenen Farbmodell L*a*b ausgedrückt wird.

3. Reifen (1) nach Anspruch 2, wobei die erste Helligkeit (L*1) zwischen 5 und 18 Einheiten, bevorzugt zwischen 8 und 16 Einheiten liegt.

4. Reifen (1) nach einem der Ansprüche 2 bis 3, wobei die Helligkeit der Kontaktfläche (7) zwischen 20 und 35 Einheiten liegt.

5. Reifen (1) nach einem der Ansprüche 1 bis 4, wobei die Seitenfläche (6) mit der Textur (4) versehen ist.

6. Reifen (1) nach einem der Ansprüche 1 bis 5, wobei die Textur (4) eine Vielzahl von Fasern (11) beinhaltet, wobei die Fasern (11) in der Textur mit einer Dichte von mindestens einer Faser je mm² verteilt sind, wobei jede Faser einen mittleren Querschnitt S zwischen 0,0005 mm² und 1 mm² hat.

7. Reifen (1) nach einem der Ansprüche 1 bis 6, wobei die Textur (4) eine Vielzahl von parallel zueinander verlaufenden Lamellen (12) beinhaltet, wobei die Schrittweite der Lamellen (12) in der Textur (4) höchstens 0,5 mm beträgt, wobei jede Lamelle 12 eine mittlere Breite zwischen 0,02 mm und 0,5 mm hat.

8. Reifen (1) nach einem der Ansprüche 1 bis 7, wobei die Texturen einen parallelepipedischen Querschnitt (13) mit einer Kantenlänge C zwischen 0,05 mm und 0,5 mm und einer Höhe Hp zwischen 0,05 mm und 0,5 mm haben.

9. Reifen (1) nach einem der Ansprüche 1 bis 8, wobei die Textur (4) aus einer Vielzahl von Hohlräumen (16) gebildet ist, wobei die Hohlräume (16) die Form von Kegeln haben, wobei sich die Hohlräume in der Tiefe der Oberfläche erstrecken und an dieser Oberfläche münden, wobei sie kreisrunde Öffnungen (15) bilden.

## Claims

1. Tyre (1) comprising a tread (8), the tyre comprising at least one groove (2), at least one wear indicator (3) disposed in the groove (2), the wear indicator comprising a contact face (7) intended to come into contact with a roadway when the tyre reaches a wear limit, the groove (2) comprising a texture (4) produced integrally with a bottom (10) of this groove (2), said texture (4) being an organized arrangement of a plurality of elements, all or some of the elements of the arrangement being the repetition of a single base element, such as a strand or a lamella, said texture (4) surrounding the wear indicator (3) and contrasting with the contact face (7) of the wear indicator, the wear indicator (3) comprising at least one lateral face (6) connecting the contact face (7) of the wear indicator to said bottom (10), **characterized in that** the groove (24) has a texture-free zone (5) disposed between a zone provided with a texture (4) and the lateral face (6) of the wear indicator, said texture-free zone (5) having a length of between 3 and 10 mm.

2. Tyre according to Claim 1, wherein the texture (4) has a lightness known as first lightness (L*1) and the contact face (7) of the wear indicator has a lightness known as second lightness (L*2), **characterized in that** the difference in lightness between the first and second lightness is at least 5 units of lightness, lightness being the parameter which characterizes a surface to reflect light to a greater or lesser extent, said lightness being expressed using a scale that ranges from 0 to 100 according to the L*a*b* colour model established by the International Commission on Illumination in 1976.

3. Tyre (1) according to Claim 2, wherein the first lightness (L*1) is between 5 and 18 units, preferably between 8 and 16 units.

4. Tyre (1) according to one of Claims 2 or 3, wherein the lightness of the contact face (7) is between 20 and 35 units.

5. Tyre (1) according to one of Claims 1 to 4, said lateral face (6) not having said texture (4).

6. Tyre (1) according to any one of Claims 1 to 5, wherein the texture (4) comprises a plurality of strands (11), said strands (11) being distributed through the texture at a density at least equal to one strand per mm², each strand having a mean cross section S of between 0.0005 mm² and 1 mm².

7. Tyre (1) according to any one of Claims 1 to 6, wherein the texture (4) comprises a plurality of mutually parallel blades (12), the spacing of the blades (12) in the texture (4) being at most equal to 0.5 mm, each blade 12 having a mean width of between 0.02 mm and 0.5 mm.

8. Tyre (1) according to any one of Claims 1 to 7, wherein the textures have a parallelepipedal cross section (13) with a side length C of between 0.05 mm and 0.5 mm and a height Hp of between 0.05 mm and 0.5 mm.

9. Tyre (1) according to any one of Claims 1 to 8, wherein the texture (4) is formed by a plurality of cavities (16), said cavities (16) being in the form of cones, said cavities extending into the depth of the surface and opening onto said surface, forming circular openings (15).
